# EUROPÄISCHE PATENTSCHRIFT

(11) **EP 0 612 263 B1**
(45) Veröffentlichungstag und Bekanntmachung des Hinweises auf die Patenterteilung: **08.05.1996**
(21) Anmeldenummer: 92922845.0
(22) Anmeldetag: 02.11.1992
(51) Int. Cl.: B01D 11/02, B09B 3/00

(54) **ENTFERNUNG VON KOHLENWASSERSTOFFEN, KÜHLSCHMIERSTOFFEN UND/ODER ÖLEN VON DER OBERFLÄCHE FEINER PARTIKEL**
REMOVAL OF HYDROCARBONS, COOLING LUBRICANTS AND/OR OILS FROM THE SURFACE OF FINE PARTICLES
ELIMINATION D'HYDROCARBURES, DE LUBRIFIANTS DE REFROIDISSEMENT ET/OU D'HUILES DE LA SURFACE DE FINES PARTICULES

(30) Priorität: 11.11.1991 DE 4137014
(43) Veröffentlichungstag der Anmeldung: 31.08.1994
(73) Patentinhaber: Henkel Kommanditgesellschaft auf Aktien, D-40191 Düsseldorf (DE)
(72) Erfinder: KALKER, Birgit, D-5000 Köln 71 (DE); SPEI, Brigitte, D-4000 Düsseldorf 13 (DE); WEHLE, Volker, D-5657 Haan (DE)
(86) Internationale Anmeldenummer: EP9202513
(87) Internationale Veröffentlichungsnummer: WO9309859

(56) Entgegenhaltungen:
- WO-A-91/11543
- DE-A- 3 705 814
- PATENT ABSTRACTS OF JAPAN vol. 14, no. 119 (M-945)6. March 1990 & JP-A-1316170 (OSAKA TITANIUM CO. LTD.) 21 December 1989

## Beschreibung

Die Erfindung betrifft ein Verfahren zur Entfernung von Kohlenwasserstoffen, Kühlschmierstoffen und/oder Ölen von der Oberfläche feiner, anorganisch-chemischer Partikel durch kombinierte Anwendung einer wäßrigen oder wasserhaltigen Reinigungslösung, Dispergieren und Anlegen eines äußeren oder inneren Ultraschallfeldes.

In der Stahl-, Automobil- und Zulieferindustrie fallen erhebliche Mengen an Schleifschlämmen an, die üblicherweise in werkseigenen Verbrennungsanlagen verbrannt oder fremdentsorgt werden. In Zukunft ist zu erwarten, daß die Verbrennung behördlicherseits nicht mehr zugelassen wird. Andererseits enthalten die Schleifschlämme eine mehr oder minder große Menge an metallischem Wertstoff und den beim Schleifprozeß verwendeten Materialien, insbesondere Aluminiumoxide und Silicate. Darüber hinaus sind die wasserhaltigen Schleifschlämme in der Regel mit Kohlenwasserstoffen, Kühlschmierstoffen und/oder Ölen durchsetzt und bilden eine zähviskose Paste.

In der WO 91/11543 wird ein Verfahren zur Entölung von kleinteiligem Feststoffgut, insbesondere metallhaltigen Produktionsrückständen und verunreinigten Böden, beschrieben, bei dem das Feststoffgut mit einer wäßrigen Spülflüssigkeit gewaschen wird, wobei das Öl in der Spülflüssigkeit emulgiert und die Spülflüssigkeit vom Feststoffgut abgetrennt wird. Vor dem Waschprozeß wird das Feststoffgut intensiv durchmischt und gleichzeitig mit einem Emulgator im wesentlichen ohne Vorhandensein von Wasser besprüht. Bei dem anschließenden Waschprozeß wird das Feststoffgut in Rührbehältern mit einer wäßrigen Spülflüssigkeit, die gegebenenfalls Tenside enthalten kann, mit Hilfe von Rührern durchmischt. Während des Waschprozesses wird das zu reinigende Gut gleichzeitig einer intensiven Ultraschalleinwirkung ausgesetzt.

Die Aufgabe der vorliegenden Erfindung besteht nun darin, die oben genannten feinen Partikel, insbesondere Schleifschlämme, so aufzubereiten, daß diese als Wertstoff wiederverwendet werden können. Um beispielsweise das Metall als Wertstoff wiederverwenden zu können, sollte dieser Bestandteil des Schlamms bis auf einen Kohlenwasserstoffgehalt von weniger als 3 Gew.-% gereinigt werden. Gleiche Vorgaben sind für die Schleifmaterialien erwünscht.

Eine prinzipielle Möglichkeit zur Entölung solcher Feinstschlämme bietet der Einsatz wäßriger Reinigungslösungen, die als solche in vielfacher Form im Handel erhältlich sind. Ein derartiges Verfahren hat jedoch keinen Eingang in die Technik gefunden, da ein geeigneter Verfahrensschritt zur Dispergierung der Feinstpartikel fehlte und die Wasch-/Reinigungslösung nicht in ausreichendem Maße die Verschmutzung der feinen Partikel entfernen konnte.

Überraschenderweise wurde nun gefunden, daß durch die kombinierte Anwendung eines äußeren oder inneren Ultraschallfeldes und gleichzeitige Passage der verunreinigten Partikel mittels eines Hochgeschwindigkeitsrührers nach dem Stator-Rotor-Prinzip und der damit erfolgten extrem hohen Schergeschwindigkeit eine Verminderung des Kohlenwasserstoffgehalts auf weniger als 3 % erreicht werden konnte.

Gegenstand der vorliegenden Erfindung ist somit in einer ersten Ausführungsform ein Verfahren zur Entfernung von Kohlenwasserstoffen, Kühlschmierstoffen und/oder Ölen von der Oberfläche feiner anorganisch-chemischer Partikel durch
a) Einbringen der Partikel in eine wäßrige oder wasserhaltige Reinigungslösung,
b) Dispergieren der Partikel in der Reinigungslösung und
c) gleichzeitiges Anlegen eines äußeren oder inneren Ultraschallfeldes,
welches dadurch gekennzeichnet ist, daß man das Dispergieren der Partikel mit Hochgeschwindigkeitsrührern nach dem Stator-Rotor-Prinzip durchführt.

Die Wirkung von üblichen Reinigungsbädern konnte durch die mechanische Bewegung der feinen Partikel mittels Hochgeschwindigkeitsrührer nach dem Stator-Rotor-Prinzip und gleichzeitigem Anlagen eines äußeren oder inneren Ultraschallfeldes erheblich gesteigert werden. Ultraschall bewirkt im Medium heftige Erschütterungen (sogenannte Mikro- und Makroturbulenzen), die für eine schnellere und bessere Durchdringung der Öl- und Fettbestandteile sorgen. Somit konnte die üblicherweise extrem feine, ölige Paste der Schleifschlämme, bedingt durch den hohen Energieeintrag, einer Wiederverwendung zugeführt werden. Nach der Entfernung der Kohlenwasserstoffe, Kühlschmierstoffe und/oder Öle von der Oberfläche der feinen Partikel kann die Waschlösung in üblicher Weise aufgetrennt werden. So ist es beispielsweise möglich, durch Anlegen eines magnetischen Feldes magnetische Werkstoffe abzutrennen.

Weiterhin kann die Waschlösung so eingestellt werden, daß sie mittels organischer Emulsionsspaltprodukte getrennt und die Wasserphase erneut dem Waschzyklus zugeführt werden kann. Ein entsprechendes Verfahren zur Steuerung der Spaltung von Öl-/Wasser-Emulsionen ist aus der DE-A-36 27 199 bekannt.

Die äußeren Rahmenbedingungen des erfindungsgemäßen Verfahrens werden wesentlich durch wirtschaftliche Gesichtspunkte bestimmt. So werden insbesondere Kohlenwasserstoffe, Kühlschmierstoffe und/oder Öle von der Oberfläche von Schleifschlämmen aus Korund und/oder Silicaten entfernt. Diese Materialien werden besonders häufig zum Schleifen im Stahl-, Automobil- und Zulieferbereich eingesetzt. Nach der Abtrennung der Kohlenwasserstoffe, Kühlschmierstoffe und/oder Öle können die Ausgangsmaterialien Korund und/oder Silicate ebenfalls einer Wiederverwendung zugeführt werden.

Die chemische Zusammensetzung der wäßrigen oder wasserhaltigen Reinigungslösung ist von untergeordneter Bedeutung. Prinzipiell können sämtliche Reinigungsmittel, die zur Reinigung von harten Oberflächen in wäßrigen Systemen eingesetzt werden, auch im vorliegenden Fall verwendet werden. Ein Überblick über entsprechende Reinigungsmittel ist aus J. Kresse, "Säuberung technischer Oberflächen", 1988, Expert-Verlag, bekannt. Neben sauren Reinigungsbädern werden auch hier zur Reinigung hauptsächlich stark alkalische und neutrale bis schwach alkalische Produkte (sogenannte Neutralreiniger) eingesetzt. Diese enthalten als wichtigste Komponente Builder- und Tensidsysteme. In einer besonderen Ausführungsform der vorliegenden Erfindung enthält die einzusetzende wäßrige oder wasserhaltige Reinigungslösung anionische und/oder nichtionische Tenside, insbesondere in einer Menge von 0,1 bis 5 Gew.-%, bezogen auf die die Partikel enthaltende Reinigungslösung. Bei den nichtionischen Tensiden besteht der hydrophile Molekülteil meist aus Polyethylenglykol- oder Polypropylenglykolgruppen, die durch Additionsreaktionen von Ethylen- oder Propylenoxid synthetisiert werden. Der hydrophobe Molekülanteil besteht meist aus aliphatischen Ketten mit und ohne Aromaten, wie beispielsweise Alkylphenole, Fettalkohole und Fettamine.

Bei den anionischen Tensiden unterscheidet man üblicherweise Carboxylate, insbesondere carboxymethylierte Oxethylate und Derivate von Aminosäuren einerseits, Sulfonate, insbesondere Alkylbenzolsulfonate, Alkylnaphthalinsulfonate, Alkansulfonate, α-Olefinsulfonate, α-Sulfofettsäureester, Sulfobernsteinsäureester, Alkoxy-, Acyloxy- und Acylaminoalkansulfonate. Darüber hinaus sind bei der Gruppe der anionischen Tenside auch die Sulfate, insbesondere Alkylsulfate und Ethersulfate, zu nennen. Neben Reinigungslösungen auf der Basis von Wasser sind auch wasserhaltige Reinigungslösungen einsetzbar. Hierunter sind beispielsweise Gemische aus Wasser mit wasserlöslichen oder nicht wasserlöslichen sowie mit Wasser mischbaren oder unmischbaren Lösungsmitteln zu verstehen, sofern diese Kombinationen geeignet sind, Kohlenwasserstoffe, Kühlschmierstoffe und/oder Öle auszutragen.

Die einzusetzende Menge der feinen Partikel, bezogen auf die Reinigungslösung, richtet sich vornehmlich nach wirtschaftlichen Gegebenheiten. Eine zu geringe Konzentration der Partikel in der Reinigungslösung erhöht zwar den Reinigungsgrad des einzelnen Reinigungsschrittes, führt jedoch zu einem hohen Verbrauch an Reinigungslösung und Energie. Eine zu große Menge an feinen Partikeln in der Reinigungslösung ist ungeeignet zur homogenen Dispersion, so daß die gewünschte Entfernung von Kohlenwasserstoffen, Kühlschmierstoffen und/oder Ölen von der Oberfläche der feinen Partikel nicht in geeigneter Weise bewirkt werden kann. Hieraus ergibt sich für die vorliegende Erfindung eine bevorzugte Konzentration von 10 bis 150 kg pro m³ Partikel, bezogen auf die wäßrige oder wasserhaltige Reinigungslösung. Diese Konzentration umfaßt die Menge an Schleifabrieb, die üblicherweise als ölige Paste anfällt. Eine Vortrocknung, beispielsweise zur Entfernung von Nasser, ist in der Regel nicht erforderlich, da das erfindungsgemäße Verfahren das Einbringen der Partikel in eine wäßrige oder wasserhaltige Reinigungslösung vorsieht.

In der Stahl-, Automobil- und Zulieferindustrie fallen Schleifschlämme an, die in trockenem Zustand eine große Menge an Kohlenwasserstoffen, Kühlschmierstoffen und/oder Ölen enthalten. Im Sinne der vorliegenden Erfindung werden vorzugsweise Schleifschlämme behandelt, die 5 bis 40 Gew.-%, insbesondere 25 bis 30 Gew.-%, Kohlenwasserstoffe, Kühlschmierstoffe und/oder Öle in trockenem Zustand enthalten. Die Menge an Verunreinigungen durch Kohlenwasserstoffe, Kühlschmierstoffe und/oder Öle bestimmt letztlich die genaue Zusammensetzung der Reinigungslösung, sowie Temperatur und Zeitdauer des Verfahrens.

Bevorzugterweise wird das Verfahren derart durchgeführt, daß der Gehalt an Kohlenwasserstoffen, Kühlschmierstoffen und/oder Ölen der Partikel auf Werte von < 3 Gew.-%, insbesondere < 1 Gew.-%, in trockenem Zustand der Partikel reduziert wird. Die so erhaltenen Partikel können dann üblichen Hausmülldeponien zugeführt werden. Darüber hinaus ist auch die Regenerierung der Schleifmittel prinzipiell möglich.

Im Rahmen der vorliegenden Erfindung wurde gefunden, daß das gewünschte Ergebnis in starkem Maße von der Dispergierung und damit vom Rühren abhängig ist. Es wurde gefunden, daß übliche Propeller-Rührer nicht geeignet sind, eine ausreichende Dispersion der feinen Partikel herbeizuführen.

Hochgeschwindigkeitsrührer nach dem Stator-Rotor-Prinzip, die im Sinne der vorliegenden Erfindung eingesetzt werden, sind beispielsweise von der Firma Jahnke & Kunkel GmbH & Co. KG unter der Bezeichnung "Ultra Turrax^{R}" im Handel erhältlich. Während einfache Geräte beispielsweise eine Umdrehungszahl von wenigstens 1000 UpM leisten, läßt sich mit anderen Geräten die wirksame Frequenz vom unteren Schallbereich bis zum Ultraschallbereich hinauf ausdehnen. Geräte mit bis zu 60000 UpM sind im Handel erhältlich. Bei den erfindungsgemäß einzusetzenden Rührern nach dem Stator-Rotor-Prinzip ist der "Rotor" in der Regel ein Scheiben- oder Schaufelrührer, der von einem Strombrecherkranz ("Stator") umgeben ist. Dadurch werden hohe Scherkräfte auf engstem Raum bewirkt. Die mit diesen Hochleistungsrührern erreichten Feinverteilungen werden durch das komplexe Zusammenwirken von mehreren Zerkleinerungsmechanismen erreicht, wobei den Turbulenzkräften im Scherspalt ein entscheidender Einfluß zukommt. Hier treten dreidimensionale örtliche und zeitliche Geschwindigkeitsschwankungen auf, die mit hochfrequenten Druckschwankungen gekoppelt sind.

Wenn dagegen handelsübliche Propeller-Rührer eingesetzt werden, so ist auch in Anwesenheit eines äußeren oder inneren Ultraschallfeldes eine ausreichende Dispersion nicht möglich, und eine Entfernung von Kohlenwasserstoffen, Kühlschmierstoffen und/oder Ölen von der Oberfläche von feinen Partikeln nur unzureichend möglich.

Dementsprechend besteht eine besondere Ausführungsform der vorliegenden Erfindung darin, daß man die Rührgeschwindigkeit des Hochgeschwindigkeitsrührers im Bereich oberhalb 1000 UpM bis hinauf in den Ultraschallbereich einstellt. Im Sinne der vorliegenden Erfindung sind Rührgeschwindigkeiten im Bereich von 1000 bis 25 000 UpM, insbesondere im Bereich von 5000 bis 10 000 UpM, bevorzugt.

Die Verwendung von Ultraschall zum Reinigen und Entfetten von Metallteilen ist an sich bekannt. Erfindungsgemäß ist es jedoch von wesentlicher Bedeutung, daß man an das zu behandelnde Reinigungsbad gleichzeitig mit der dispergierenden Behandlung desselben ein äußeres oder inneres Ultraschallfeld anlegt. Als Frequenzbereich des Ultraschalls kommt für die Durchführung des erfindungsgemäßen Verfahrens der gesamte, heute bekannte Frequenzbereich in Betracht, der von Frequenzen oberhalb 20 kHz bis hin zum Hyperschallbereich (> 10⁹ Hz) reicht. Im Sinne der vorliegenden Erfindung sind Frequenzen des Ultraschalls im Bereich von 20 bis 100 kHz, insbesondere im Bereich von 20 bis 60 kHz, bevorzugt. Die Ultraschallquelle kann sich hierbei sowohl außerhalb als auch innerhalb des Reinigungsbades befinden, wobei es erfindungsgemäß bevorzugt ist, daß die Ultraschallquelle innerhalb des Bades angeordnet ist. Es ist jedoch auch durchaus möglich, beim erfindungsgemäßen Verfahren mit handelsüblichen Ultraschallgeräten zu arbeiten, die sich außerhalb des Reinigungsbades befinden.

Je nach Art und Menge der Verschmutzung sind die Badparameter wie Temperatur und Dauer des Entfernungsverfahrens von Kohlenwasserstoffen, Kühlschmierstoffen und/oder Ölen einzustellen.

Bekanntermaßen führen mehrere, aufeinanderfolgende Reinigungsschritte zu einem verbesserten Reinigungserfolg gegenüber einem gleichen Verfahren in einem Arbeitsgang. Dementsprechend wird auch im Sinne der vorliegenden Erfindung die Reinigung einmal oder mehrmals zu wiederholen sein, insbesondere wenn ein sehr hoher Reinigungsgrad erreicht werden soll. Bei der Anwendung sukzessiver Reinigungsschritte ist auch der Gesamtbedarf an Reiniger geringer. So kann es erforderlich sein, die Zahl der Reinigungszyklen und deren Dauer beispielsweise jeweils von 1 bis 10 min zu variieren. Die optimale Zahl der Reinigungszyklen und deren jeweilige Dauer kann der Fachmann anhand einer vorgegebenen Reinigungs-Aufgabe durch einfache Versuche ohne weiteres bestimmen.

Da gemäß der vorliegenden Erfindung mit wäßrigen oder wasserhaltigen Reinigungslösungen gearbeitet wird, ergibt sich ein bevorzugter Temperaturbereich des Reinigungsverfahrens von 15 bis 80 °C. Aus ökonomischen Gründen wird prinzipiell ein Verfahren bei Raumtemperatur angestrebt sein. Jedoch ist ersichtlich, daß bei höherer Temperatur in der Regel ein geringerer Reinigungsmittel- und/oder Zeitbedarf besteht.

### Beispiele

In den nachfolgenden Beispielen und Vergleichsbeispielen wurde jeweils wie folgt vorgegangen:
Jeweils 50 g Schleifabrieb (Schleifschlamm A bis D) aus der Automobilindustrie mit den in Tabelle 1 aufgeführten Spezifikationen wurden mit 1 l 1 Gew.-%iger Reinigungslösung, enthaltend die in den Tabellen 2 bis 5 mit "X" oder "Y" bezeichneten Reinigungslösungen, in ein Becherglas gegeben und mittels Hochgeschwindigkeitsrührer (UT), Ultraschall (US) und/oder einem Propellerrührer (PR) jeweils 3 min (1 Zyklus) bei den in Tabellen 2 bis 5 genannten Temperaturen dispergiert. Im Anschluß daran wurde der Kohlenwasserstoffgehalt (KW-Gehalt) der Schlämme nach Trocknung bestimmt.

Die Abtrennung magnetischer Werkstoffe erfolgte durch Anlegen eines magnetischen Feldes.

**Tabelle 1**

| Schleifschlamm | Wassergehalt (Gew.-%) | Glühverlust*) (Gew.-%) | KW-Gehalt (Gew.-%) | Fe-Gehalt (Gew.-%) |
|---|---|---|---|---|
| A | 26,6 | 13,0 | 9,1 | 66,3 |
| B | 4,8 | 53,9 | 34,2 | 5,13 |
| C | 6,7 | 27,8 | 19,5 | 24,2 |
| D | 3,9 | 57,0 | 33,8 | 13,1 |

| | | | | |
|---|---|---|---|---|
| *) Glühverlust bei 500 °C | | | | |

Die in obiger Tabelle genannten Kohlenwasserstoffgehalte beziehen sich auf Mineralölkohlenwasserstoffe nach Trocknung (abzüglich der an SiO₂ adsorbierbaren Stoffe). Auch der Fe-Gehalt wurde nach Trocknung bestimmt.

Bei dem nachfolgend mit "X" bezeichneten Reinigungsmittel handelt es sich um die 1 Gew.-%ige Lösung eines hochkonzentrierten Reinigers aus einem ethoxylierten Fettalkohol und Natriumalkylsulfonat im Verhältnis von 1 : 2 (P3-ferrolin^{R} 8646, Henkel KGaA).

In gleicher Weise enthält das mit "Y" bezeichnete Reinigungsmittel eine 1 Gew.-%ige Lösung aus einem Gemisch aus 4 Teilen ethoxyliertem und propoxyliertem Fettalkohol, 2 Teilen Natriumalkylsulfonat und 1 Teil ethoxyliertem Fettalkohol (TR 8648, Henkel KGaA).

Die Versuche wurden durchgeführt mit einem Ultra Turrax^{R} T25 der Firma Jahnke & Kunkel mit einer feststehenden Drehzahl von 8000 UpM und einer Ultraschallanlage der Firma Julabo mit einer Ultraschallfrequenz von 35 kHz. Bei diesen Versuchen war die Ultraschallquelle außerhalb des Reinigungsbades angeordnet. Im Vergleich dazu wurde mit einem Propellerrührer bei 600 UpM dispergiert. Die Mechanik wurde dabei jeweils allein oder in Kombination eingesetzt.

Die nachfolgenden Tabellen 2 bis 5 mit den dazugehörigen Erläuterungen geben die vorteilhaften Varianten des Verfahrens wieder.

### Beispiele 1 bis 6 und Vergleichsbeispiele 1 bis 3

In den Beispielen und Vergleichsbeispielen dieses Abschnittes wurde der obige Schleifschlamm A mit einer relativ geringen Ausgangsbelastung von 9,1 Gew.-% Kohlenwasserstoffen eingesetzt.

Ein Vergleich der Beispiele 1 bis 3 untereinander belegt, daß bei Wiederholung der einzelnen Reinigungszyklen von jeweils 1 x 3 min bis 3 x 3 min ein Produkt erhalten werden kann, das einen Kohlenwasserstoffgehalt von 2 Gew.-% aufweist.

Der Vergleich der Beispiele 4 und 5 untereinander zeigt, daß bei im übrigen unveränderten Badbedingungen ein verbesserter Kohlenwasserstoffgehalt zu verzeichnen ist.

Ein Vergleich der Beispielspaare 3 und 4 einerseits und 5 und 6 andererseits zeigt die Abhängigkeit des erhaltenen Ergebnisses von dem jeweils eingesetzten Reiniger.

Ein Vergleich des Beispiels 5 mit dem Vergleichsbeispiel 1 belegt, daß bei fehlendem Hochgeschwindigkeitsrührer ein erhöhter Kohlenwasserstoffgehalt in Kauf genommen werden muß. Gleiches geht auch aus dem Vergleich des Beispieles 6 mit den Vergleichsbeispielen 2 und 3 hervor. Weder Ultraschall allein noch Hochgeschwindigkeitsrühren allein ist geeignet, bei gleicher Temperatur und gleicher Zahl von Reinigungszyklen das gewünschte Ergebnis des Beispiels 6 auch nur annähernd zu erreichen.

Die nachfolgende Tabelle 2 gibt die im einzelnen erhaltenen Daten der Beispiele 1 bis 6 und der Vergleichsbeispiele 1 bis 3 wieder.

**Tabelle 2**

| Beispiel | Disp. | Reiniger | Zyklen | Temp. (°C) | KW-Gehalt (Gew.-%) |
|---|---|---|---|---|---|
| 1 | UT/US | X | 1 | 20 | 5,5 |
| 2 | UT/US | X | 2 | 20 | 3,6 |
| 3 | UT/US | X | 3 | 20 | 2,0 |
| 4 | UT/US | Y | 3 | 20 | 4,2 |
| 5 | UT/US | Y | 3 | 60 | 3,3 |
| 6 | UT/US | X | 3 | 60 | 0,7 |
| Vgl. 1 | US | Y | 3 | 60 | 3,8 |
| Vgl. 2 | US | X | 3 | 60 | 2,9 |
| Vgl. 3 | UT | X | 3 | 60 | 2,6 |

### Beispiel 7 und Vergleichsbeispiele 4 bis 6

In dieser Staffel der Beispiele wurde der Schleifschlamm B eingesetzt.

Beim Vergleich des Beispiels 7, bei dem die Kombination aus Ultraschall und Hochgeschwindigkeitsrühren eingesetzt wurde, konnte ein außerordentlich niedriger Kohlenwasserstoffgehalt des Schleifschlammes nach Trocknung wie oben gemessen werden. Demgegenüber zeigt sich, daß bei Anwendung von Ultraschall allein (Vergleichsbeispiel 4) Hochgeschwindigkeitsrühren (Vergleichsbeispiel 5) und bei der kombinierten Anwendung eines Propellerrührer und Ultraschall (Vergleichsbeispiel 6) keinesfalls akzeptable Verminderungen der Kohlenwasserstoffgehalte beobachtet werden konnten. Die nachfolgende Tabelle 3 gibt die im einzelnen erhaltenen Daten des Beispiels 7 und der Vergleichsbeispiele 4 bis 6 wieder.

**Tabelle 3**

| Beispiel | Disp. | Reiniger | Zyklen | Temp. (°C) | KW-Gehalt (Gew.-%) |
|---|---|---|---|---|---|
| 7 | UT/US | X | 3 | 20 | 0,4 |
| Vgl. 4 | US | X | 3 | 20 | 19,6 |
| Vgl. 5 | UT | X | 3 | 20 | 9,6 |
| Vgl. 6 | PR/US | X | 3 | 20 | 13,5 |

### Beispiele 8 bis 12 und Vergleichsbeispiele 7 und 8

Ein Vergleich des Beispiels 8 mit den Vergleichsbeispielen 7 oder 8 offenbart die Überlegenheit der kombinierten Anwendung von Ultraschall und Hochgeschwindigkeitsrühren im Vergleich zu Ultraschallanwendung oder Hochgeschwindigkeitsrühren allein. Bei gleicher Zahl der Reinigungszyklen und gleicher Temperatur wird gemäß dem erfindungsgemäßen Beispiel 8 ein deutlich niedrigerer Kohlenwasserstoffgehalt gemessen.

Ein Vergleich der Beispiele 9 bis 11 untereinander zeigt, daß auch bei einem Schleifschlamm mit relativ hohem Ausgangskohlenwasserstoffgehalt durch die Wiederholung einzelner Reinigungszyklen der Kohlenwasserstoffgehalt auf gewünschte Bereiche reduziert werden kann. Bereits nach 3 Reinigungszyklen à 3 min (Beispiel 10) ist der Kohlenwasserstoffgehalt auf 0,2 Gew.-% gesunken.

Ein direkter Vergleich der Beispiele 10 und 12 miteinander zeigt auch hier die Abhängigkeit des Verfahrens von dem jeweiligen Reinigertyp bei ansonsten gleichen Badbedingungen.

Die nachfolgende Tabelle 4 gibt die erhaltenen Daten der Beispiele 8 bis 12 und der Vergleichsbeispiele 7 und 8 wieder.

**Tabelle 4**

| Beispiel | Disp. | Reiniger | Zyklen | Temp. (°C) | KW-Gehalt (Gew.-%) |
|---|---|---|---|---|---|
| 8 | UT/US | X | 2 | 60 | 1,9 |
| 9 | UT/US | X | 1 | 20 | 9,3 |
| 10 | UT/US | X | 3 | 20 | 0,2 |
| 11 | UT/US | X | 4 | 20 | 0,1 |
| 12 | UT/US | Y | 3 | 20 | 1,8 |
| Vgl. 7 | US | X | 2 | 60 | 2,9 |
| Vgl. 8 | UT | X | 2 | 60 | 3,1 |

### Beispiele 13 und 14 und Vergleichsbeispiel 9

Bei dieser Beispielstaffel wurde der Schleifschlamm D mit einer relativ hohen Ausgangsbelastung an Kohlenwasserstoffen eingesetzt. Auch hier zeigt die Erhöhung der Zahl der Reinigungszyklen von 3 auf 4 Zyklen à 3 min eine weitere Verminderung des Kohlenwasserstoffgehalts. Der Vergleich des Beispiels 13 mit dem Vergleichsbeispiel 9 zeigt auch hier, daß mit Hilfe einer kombinierten Anwendung eines Propellerrührers und eines Ultraschallfeldes keine ausreichende Verminderung des Kohlenwasserstoffgehalts gegenüber einer vergleichbaren Anordnung mit einem Hochgeschwindigkeitsrührer erhalten werden kann.

Die nachfolgende Tabelle 5 gibt die erhaltenen Daten der Bespiele 13 und 14 und des Vergleichsbeispiels 9 wieder.

**Tabelle 5**

| Beispiel | Disp. | Reiniger | Zyklen | Temp. (°C) | KW-Gehalt (Gew.-%) |
|---|---|---|---|---|---|
| 13 | UT/US | X | 3 | 20 | 2,7 |
| 14 | UT/US | X | 4 | 20 | 0,7 |
| Vgl. 9 | PR/US | X | 3 | 20 | 33,1 |

### Waschwasserwiederverwendung

An den in den oben genannten Beispielen erhaltenen Waschlösungen wurden Spaltversuche durchgeführt. Es wurde jeweils die Waschwasserprobe ausgewählt, die nach entsprechender mechanischer Dispergierung den besten Reinigungserfolg erbrachte, d.h. auch die höchste Kohlenwasserstoffbelastung der überstehenden Lösung aufwies.

Die als organische Spalter verwendeten Verbindungen sind aus dem Stand der Technik bekannt. Als Spalter (Demulgatoren) kommen vorzugsweise kationische Polymere zur Anwendung. Diese weisen vorzugsweise ein Molekulargewicht im Bereich von 50 000 bis 500 000 auf. In der Praxis werden mit Vorteil, d.h. mit guten Spaltergebnissen schon bei kleinen Demulgatorkonzentrationen, Verbindungen auf der Basis von Polyaminen, Polyamidaminen, Polyiminen, Kondensationsprodukten aus o-Toluidin und Formaldehyd, quartären Ammoniumverbindungen und ionogenen Tensiden verwendet. Von diesen sind Polyamine mit einem mittleren Molekulargewicht im Bereich von 75 000 bis 200 000 schon bei niedrigen Spalterkonzentrationen besonders bevorzugt.

Für die Reinigungsversuche an zwei Proben (1) und (2) sind nachfolgend die Spaltversuche und Ergebnisse am Waschwasser beispielhaft dargestellt:

### Probe 1:

Das Waschwasser, erhalten nach Durchführung der Reinigung gemäß Beispiel 6, wies eine Ausgangskohlenwasserstoffbelastung von 3,040 mg/l auf. Der chemische Sauerstoffbedarf (CSB) betrug 30 400 mg O₂/l; gespalten wurde mit einem Polyamin mit einem Molekulargewicht im Bereich von 75 000 bis 250 000 (P3-ferrolin^{R} 8687). Die Dosis betrug 0,38 Vol.-%, der Kohlenwasserstoffgehalt im Spaltwasser betrug 170 mg/l, der chemische Sauerstoffbedarf (CSB) 4 410 mg O₂/l.

### Probe 2:

Eine weitere Probe 2 wurde nach Durchführung gemäß Beispiel 6 mit einer Ausgangskohlenwasserstoffbelastung des Waschwassers von 7 100 mg/l und einem chemischen Sauerstoffbedarf von 32 150 mg O₂/l bestimmt. Es wurde wiederum mit dem oben genannten Spaltmittel gespalten, wobei die Dosis 0,47 Vol.-% betrug. Im Spaltwasser wurden bestimmt: Kohlenwasserstoffgehalt 124 mg/l, chemischer Sauerstoffbedarf 7 430 mg O₂/l.

## Patentansprüche

1. Verfahren zur Entfernung von Kohlenwasserstoffen, Kühlschmierstoffen und/oder Ölen von der Oberfläche feiner anorganisch-chemischer Partikel durch
a) Einbringen der Partikel in eine wäßrige oder wasserhaltige Reinigungslösung,
b) Dispergieren der Partikel in der Reinigungslösung und
c) gleichzeitiges Anlegen eines äußeren oder inneren Ultraschallfeldes, dadurch gekennzeichnet, daß man das Dispergieren der Partikel mit Hochgeschwindigkeitsrührern nach dem Stator-Rotor-Prinzip durchführt.

2. Verfahren nach Anspruch 1, dadurch gekennzeichnet, daß die Reinigerlösung anionische und/oder nichtionische Tenside, insbesondere in einer Menge von 0,1 bis 5 Gew.-%, bezogen auf die die Partikel enthaltende Reinigungslösung, enthält.

3. Verfahren nach Anspruch 1 oder 2, dadurch gekennzeichnet, daß die Reinigungslösung nach Einbringen der Partikel 10 bis 150 kg/m³ der Partikel enthält.

4. Verfahren nach einem oder mehreren der Ansprüche 1 bis 3, dadurch gekennzeichnet, daß man Kohlenwasserstoffe, Kühlschmierstoffe und/oder Öle von den Oberflächen von Schleifschlämmen aus Korund und/oder Silicaten entfernt.

5. Verfahren nach Anspruch 4, dadurch gekennzeichnet, daß man Schleifschlämme behandelt, die 5 bis 40 Gew.-%, insbesondere 25 bis 30 Gew.-%, Kohlenwasserstoffe, Kühlschmiermittel und/oder Öle in trockenem Zustand der Partikel enthalten.

6. Verfahren nach einem oder mehreren der Ansprüche 1 bis 5, dadurch gekennzeichnet, daß man die Rührgeschwindigkeit des Hochgeschwindigkeitsrührers auf Werte im Bereich oberhalb 1 000 UpM bis 25 000 UpM, insbesondere von 5 000 bis 10 000 UpM, einstellt.

7. Verfahren nach einem oder mehreren der Ansprüche 1 bis 6, dadurch gekennzeichnet, daß man die Frequenz des Ultraschalls auf Werte im Bereich von 20 bis 100 kHz, insbesondere von 20 bis 60 kHz, einstellt.

8. Verfahren nach einem oder mehreren der Ansprüche 1 bis 7, dadurch gekennzeichnet, daß man die Entfernung in einem oder in mehreren Reinigungszyklen, insbesondere jeweils von 1 bis 10 min Dauer, durchführt.

9. Verfahren nach einem oder mehreren der Ansprüche 1 bis 8, dadurch gekennzeichnet, daß man die Temperatur der Reinigungslösung im Bereich von 15 bis 80 °C, insbesondere auf Raumtemperatur, einstellt.

## Claims

1. A process for removing hydrocarbons, cooling lubricants and/or oils from the surface of fine inorganic chemical particles by
a) introducing the particles into an aqueous or water-containing cleaning solution,
b) dispersing the particles in the cleaning solution and
c) simultaneously applying an external or internal ultrasonic field,
characterized in that the particles are dispersed by high-speed stirrers on the stator/rotor principle.

2. A process as claimed in claim 1, characterized in that the cleaning solution contains anionic and/or nonionic surfactants, more particularly in a quantity of 0.1 to 5% by weight, based on the particle-containing cleaning solution.

3. A process as claimed in claim 1 or 2, characterized in that, after introduction of the particles, the cleaning solution contains 10 to 150 kg/m³ of the particles.

4. A process as claimed in one or more of claims 1 to 3, characterized in that hydrocarbons, cooling lubricants and/or oils are removed from the surfaces of abrasive pastes of corundum and/or silicates.

5. A process as claimed in claim 4, characterized in that abrasive pastes containing 5 to 40% by weight and more particularly 25 to 30% by weight of hydrocarbons, cooling lubricants and/or oils in the dry state of the particles are treated.

6. A process as claimed in one or more of claims 1 to 5, characterized in that the stirring speed of the high-speed stirrer is adjusted to values above 1,000 r.p.m. to 25,000 r.p.m. and more particularly to values of 5,000 to 10,000 r.p.m.

7. A process as claimed in one or more of claims 1 to 6, characterized in that the frequency of the ultrasound is adjusted to values in the range from 20 to 100 kHz and more particularly to values in the range from 20 to 60 kHz.

8. A process as claimed in one or more of claims 1 to 7, characterized in that removal is carried out in one or more cleaning cycles each with a duration of, in particular, 1 to 10 mins.

9. A process as claimed in one or more of claims 1 to 8, characterized in that the temperature of the cleaning solution is adjusted to a value in the range from 15 to 80°C and more particularly to room temperature.

## Revendications

1. Procédé d'élimination d'hydrocarbures, de lubrifiants de refroidissement et/ou d'huiles de la surface de fines particules de la chimie inorganique par
a) placement des particules dans une solution de nettoyage aqueuse contenant de l'eau,
b) dispersion des particules dans la solution de nettoyage, et
c) application simultanée d'un champ d'ultrasons externe ou interne,
caractérisé en ce que l'on effectue la dispersion des particules avec des agitateurs à grande vitesse selon le principe stator-rotor.

2. Procédé selon la revendication 1, caractérisé en ce que la solution de nettoyage contient des agents tensioactifs anioniques et/ou non ioniques et, en particulier, en quantité de 0,1 à 5% en poids rapportée à la solution de nettoyage contenant les particules.

3. Procédé selon la revendication 1 ou 2, caractérisé en ce que la solution de nettoyage contient, après l'introduction de particules, de 10 à 150 kg de particules/m³.

4. Procédé selon une ou plusieurs des revendications 1 à 3, caractérisé en ce que l'on élimine des hydrocarbures, des lubrifiants de refroidissement et/ou des huiles de la surface des boues de meulage formées de corindon et/ou de silicates.

5. Procédé selon la revendication 4, caractérisé en ce que l'on traite des boues de meulage contenant de 5 à 40% en poids et, en particulier, de 25 à 30% en poids d'hydrocarbures, de lubrifiants de refroidissement et/ou d'huiles dans les particules à l'état sec.

6. Procédé selon une ou plusieurs des revendications 1 à 5, caractérisé en ce que l'on règle la vitesse d'agitation de l'agitateur à grande vitesse à des valeurs comprises dans la gamme au-dessus de 1 000 t/min jusqu'à 25 000 t/min et, en particulier, entre 5 000 et 10 000 t/min.

7. Procédé selon une ou plusieurs des revendications 1 à 6, caractérisé en ce que l'on règle la fréquence des ultrasons à des valeurs comprises dans la gamme de 20 à 100 kHz et, en particulier, de 20 à 60 kHz.

8. Procédé selon une ou plusieurs des revendications 1 à 7, caractérisé en ce que l'on effectue l'élimination en un ou plusieurs cycles de nettoyage et, en particulier, selon des cycles durant chacun de 1 à 10 minutes.

9. Procédé selon une ou plusieurs des revendications 1 à 8, caractérisé en ce que l'on règle la température de la solution de nettoyage dans la gamme de 15 à 80°C et, en particulier, que cette température est la température ambiante.
